# EUROPEAN PATENT SPECIFICATION

(11) **EP 2 976 927 B1**
(45) Date of publication and mention of the grant of the patent: **31.05.2017**
(21) Application number: 14716367.9
(22) Date of filing: 14.03.2014
(51) Int. Cl.: H04W 84/22, H04W 88/04

(54) **NODE PARTITIONING**
KNOTENPARTITIONIERUNG
PARTITIONNEMENT DE NOEUD

(30) Priority: 22.03.2013 GB 201305255
(43) Date of publication of application: 27.01.2016
(73) Proprietor: Cambridge Communication Systems Limited, Cambridge CB3 ORN (GB)
(72) Inventor: PORTER, John, David, Ely Cambridgeshire CB6 2HP (GB); ZEFFERTT, Alexander, John, Cambridge CB1 3AL (GB); BARDEN, Richard, Mark, Cambridge CB4 1 DZ (GB)
(74) Representative: Turner, Richard Charles
(86) International application number: PCT/GB2014/000094
(87) International publication number: WO 2014/147363

(56) References cited:
- WO-A1-2012/130261
- US-A1- 2004 166 852
- US-A1- 2008 298 249
- SHIBATA T ET AL: "CEllular Local Area Radio Network: CELARN", VEHICULAR TECHNOLOGY CONFERENCE, 1994 IEEE 44TH STOCKHOLM, SWEDEN 8-10 JUNE 1994, NEW YORK, NY, USA,IEEE, 8 June 1994 (1994-06-08), pages 629-633, XP010123355, DOI: 10.1109/VETEC.1994.345050 ISBN: 978-0-7803-1927-1

## Description

This invention relates to a method of processing a set of wireless nodes and to a system comprising the set of wireless nodes.

Wireless communication is very widely used in the developed world. For example, mobile telephones are virtually ubiquitous and are commonly carried by their users at all times. Such telephones are traditionally used for making and receiving telephone calls and sending and receiving short messages (SMS). The more advanced modern phones, often referred to as smartphones, have further provision for advanced data services such as the sending and receiving of emails and the accessing of wide area networks such as the Internet. Advances in wireless technology have resulted in a progression in the use of wireless standards from the original analogue service, through GSM and 3G to emerging 4G and related standards. These standards have led to the development of ever more capable handheld devices.

In conjunction with the advances in technology required of the handset, the increased usage of mobile phones and the more data intensive services that are now commonly used has led to an increased load on the infrastructure providing the wireless service. A mobile phone wireless network has been typically configured as a set of wireless base stations that cover one or more cells that are then connected into a wired backbone telecommunication service. As more and more demand is placed on the wireless network, then base stations are sited closer together with smaller cells. In urban areas in particular, given the high density of users, the locating of base stations is becoming a significant technical problem, given that a base station must have a wired connection into the wired backbone telecommunication service. It is not always possible to physically locate a base station in the precise location that would be desirable from the point of view of the wireless network provision.

International Patent Application Publication WO 2012/130261 discloses a method and apparatus for performing relay node configuration and reconfiguration in relay enhanced networks.

It is therefore an object of the invention to improve upon the known art.

According to a first aspect of the present invention, there is provided a method of processing a set of wireless nodes, wherein a subset of the wireless nodes are also wired nodes, the method comprising performing a node initialisation, thereby linking nodes in the set of wireless nodes, characterised in that the method further comprises performing a link evaluation, thereby determining a quality characteristic of links between nodes, and segmenting the nodes into partitions, each partition comprising at least one wired node and each node in a partition having a link to another node in the same partition with the determined quality characteristic above a predetermined threshold.

According to a second aspect of the present invention, there is provided a system comprising a set of wireless nodes, wherein a subset of the wireless nodes are also wired nodes, the system arranged to perform a node initialisation, thereby linking nodes in the set of wireless nodes, characterised in that the system is further arranged to perform a link evaluation, thereby determining a quality characteristic of links between nodes, and segment the nodes into partitions, each partition comprising at least one wired node and each node in a partition having a link to another node in the same partition with the determined quality characteristic above a predetermined threshold.

According to a third aspect of the present invention, there is provided a computer program product on a computer readable medium for processing a set of wireless nodes, wherein a subset of the wireless nodes are also wired nodes, the product comprising instructions for performing a node initialisation, thereby linking nodes in the set of wireless nodes, characterised in that the product further comprises instructions for performing a link evaluation, thereby determining a quality characteristic of links between nodes, and segmenting the nodes into partitions, each partition comprising at least one wired node and each node in a partition having a link to another node in the same partition with the determined quality characteristic above a predetermined threshold.

Owing to the invention, it is possible to provide an efficient method and system for segmenting a large number of wireless nodes (some of which are also wired nodes) into discrete partitions, each partition containing at least one wired node. A quality characteristic, such as signal to noise ratio, is used to measure links between wireless nodes, and nodes are clustered into partitions based on the quality characteristic. This provides an automated process of segmenting the nodes, for example when a network is initially configured, which will allow data to be transferred from the wireless nodes to the wired node within the partition and then into the backbone infrastructure of the wireless network in an efficient manner. This allows the wireless nodes to be physically located without undue consideration being given to the routing back to a wired node, as the nodes can be automatically configured into partitions that will then be used as the basis for the data routing within the overall wireless network.

The segmenting of the nodes into partitions can occur once all of the nodes are placed into position or can occur step-by-step as each node is located, with the segmenting being recalculated as each node is powered up and connected into the set of nodes. The nodes are intended to provide a wireless infrastructure between a wireless station of a mobile phone network that does not have a wired connection into the telecoms backbone and a wired connection into that backbone. This allows mobile phone network base stations to be located in urban areas where they cannot be directly connected into the wired network. The wireless nodes provide a local area network that communicates from the base station to the local wired connection into the telecoms backbone.

Preferably, the method further comprises connecting a new node into the set of wireless nodes, performing node initialisation and link evaluation for the new node, and adding the new node into an existing partition such that the new node has a link to another node in the same partition with the determined quality characteristic above the predetermined threshold. The node partitioning does not have to be static and new nodes that are added to the set of nodes can be automatically added into an existing partition. This allows the addition of new nodes with greater coverage to be added without requiring a reconfiguration of the whole set of nodes.

Advantageously, the method further comprises defining, for each partition, a preferred route for each node in the partition from the respective node to a wired node in the partition. Each partition has at least one wired node present within the partition. The wired nodes are those nodes that are connecting the wireless nodes back into the network backbone and so all network traffic to and from the wireless nodes have to be routed through a wired node in the partition. By maintaining a preferred route for the connection of each wireless node to a wired node in the partition it is possible to quickly route data to and from the specific node in the partition over the shortest (most efficient) route.

Ideally, each node comprises a plurality of antennas and the step of performing the link evaluation comprises determining a quality characteristic of links between individual antennas of the nodes. Each wireless node can be provided with multiple antennas, for example twelve antennas arranged in a horizontal array, giving, for example 270 degrees coverage. The links between nodes are therefore specific to antenna pairs, with the best quality connections between specific antennas being used to communicate between nodes. This provides an efficient method of communicating between nodes while minimising the possibility of interference. In this case, ideally the preferred route for each node in the partition from the respective node to a wired node in the partition is defined on an antenna-to-antenna basis.

Embodiments of the present invention will now be described, by way of example only, with reference to the accompanying drawings, in which:-
Figure 1 is a schematic diagram of two wireless nodes mounted on a pole,
Figures 2a and 2b are schematic diagrams of a set of wireless nodes, before and after partitioning,
Figure 3 is a schematic diagram of a wireless node,
Figure 4 is a schematic diagram of the wireless node with radome removed,
Figure 5 is a flowchart of a method of processing a set of nodes, and
Figure 6 is a schematic diagram of a system including a set of nodes.

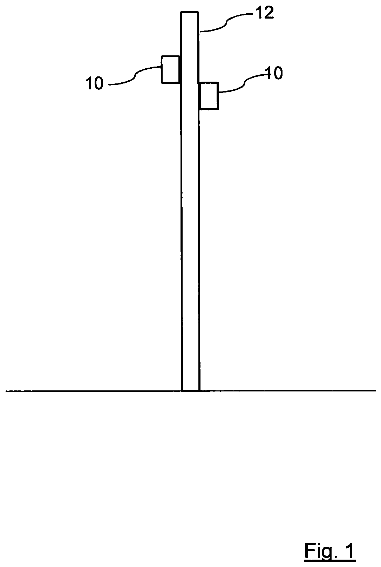

Figure 1 shows two wireless nodes 10 that are mounted on a pole 12. A wireless system is provided that consists of a number of these street-pole mounted Network Node Devices (NNDs) 10 which have a wide field of view of their environment and are connected to power, (optionally) the cellular equipment and/or the internet via wired Ethernet connections capable of data rates of up to 1GB/s. The system units 10 each consist of a data management subsystem, a processing subsystem, a radio subsystem which includes a modulator/demodulator (modem) and a switched antenna array which provides the wide field of view that approaches 270 degrees. The components are contained in a two-piece sealed box.

The combination of the antenna array and the radio subsystem's support for multiple frequencies provide a number of discrete spatially- and frequency-diverse transmit channels. The modem's modulation and error correction coding (ECC) strategies can be varied to accommodate variations in channel quality. The data management subsystem takes sequences of data (encapsulated in system frames), extracts the destination information and where necessary fragments or re-assembles data frames for forwarding via the radio subsystem. Higher level system routing information is provided to the processing sub-system which use it to decide on an antenna/frequency combination to switch to when transmitting a data packet.

A local area network is created by placing a large number of the wireless nodes 10 in a specific locality. Each node 10 can communicate with any other node 10 as long as there is line of sight between the nodes 10. The multiple directional antennas within the wireless nodes 10 mean that a single node can have line of sight with a large number of other nodes 10 and indeed the same pair of nodes 10 may be able to communicate over different antenna pairs. Once the nodes 10 are located, then they have to be configured into smaller partitions of nodes, in order to ensure efficiency of data routing and to avoid interference between different nodes 10.

Prior to any data traffic on the network of nodes 10, various network functional phases are executed. The first of these phases is an initialisation phase. The system utilises a data frame structure which has a repeat cycle of one second. This allows the system's NNDs to use a global timing reference, derived from a local GPS receiver, which defines a global start-of-frame boundary aligned to the GPS defined global one second tick. A number of the NNDs are connected to the private wired network/public internet via their Ethernet connections. These wired nodes determine their status and establish their identity by connecting to a predetermined set of system servers, either via the private wired network/public internet. These are initially the only NNDs that are allowed to attempt communication with other NNDs in the network. These Ethernet connected NNDs are considered to be Edge Node Devices (ENDs). ENDs and NNDs describe their connectivity and capability by means of codes embedded in the codes of their transmitted frames.

The second phase comprises link establishment and initialisation. The ENDs start broadcasting their status and initiate data links with NNDs. All non-ENDs are initially in a listening mode, cycling through the frequency/antenna channel combinations, looking for transmitting ENDs. Once a set of one or more ENDs have been located, the non-END NNDs are permitted to associate and communicate with the ENDs identified using allocated registration and polling slots. This is achieved by looking for RF energy in each band and when found, looking for frames. Once this initial phase is complete, all NNDs listen for other NND transmissions during an interference measurement phase. The registration and interference measurement slots are always at specific timings within a frame so that any node knows when to transmit or listen for them.

The third phase comprises link evaluation. Once ENDs and NNDs can communicate with each other (and by implication the network they are attached to) the nodal co-interference is evaluated and information collected by each of the NNDs during this phase is communicated to the ENDs with which they have established communication. The ENDs in turn report this information to their network/internet system servers. Each of the possible inter NND link channels is qualitatively evaluated, taking into consideration path attenuation, internal and external noise sources and the signal levels observed from other NNDs, thereby determining a quality characteristic of links between nodes.

Interference is measured between antenna pairs i.e. transmission on one antenna and node (at a particular power level) to the receiving antenna at another node. This is not quite the same as link to link interference; it may be that an antenna at a node will be used for multiple links at different power levels. For the purpose of interference measurement this distinction is not important, however, for actual link-link interference the transmit power level and receive modulation level are clearly relevant.

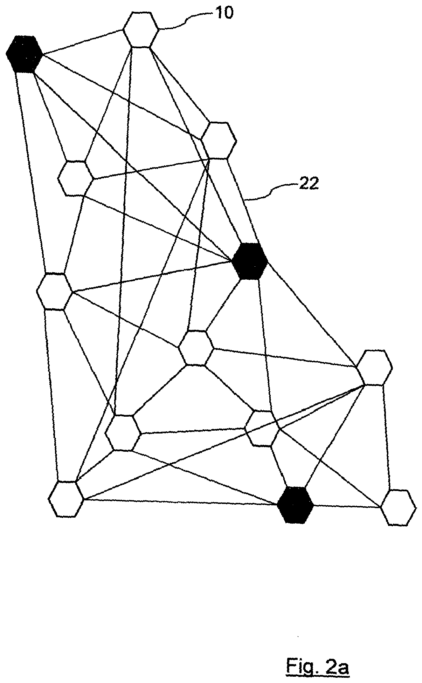

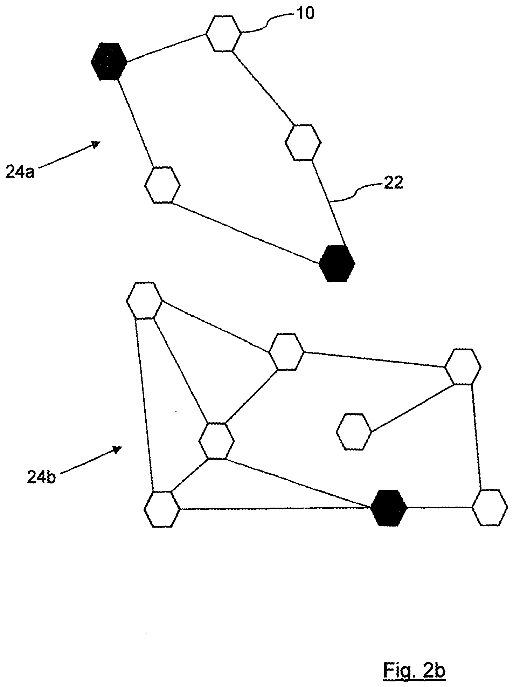

The fourth phase comprises network segmentation. The possible set of NNDs that can communicate is large. At an extreme, if there are a antennas per node and n nodes there are therefore ((n-1)*a)^2 possible pairs of antenna interferers in the network. In practice only a small subset of antennas is active at any node and only a small subset of links can possibly interfere. To make a network with any large number of NNDs realistically manageable requires that the NNDs are grouped and clustered in some optimal way. Figure 2 shows the difference in complexity between the clustered and un-clustered network.

Figures 2a and 2b illustrate an example of a set of thirteen wireless nodes 10, of which three nodes are also wired nodes (shown in black). In Figure 2a, prior to partition, the possible links 22 between nodes 10 are shown. In Figure 2b, the set has been partitioned into two discrete partitions 24a and 24b, each of which has at least one wired node 10 present. The usable links 22 between the nodes 10 within each partition 24 are also shown Figure 2b.

All NNDs (the nodes shown in white) have access to one or more ENDs (the nodes shown in black), considering link and node capacity, the data transit times through any prospective link, the number of inter NND hops required, the inter-NND link quality and any NND's susceptibility to interference. Channels collisions and interference is eliminated as far as possible and where complete elimination is not possible, co-channel interference is minimised by using different transmit power levels and/or different modulation strategies and levels of ECC coding. The qualitative information gathered is evaluated and the NNDs are optimally clustered into nodal cliques so that NNDs with are clustered by their potential to interfere with each other into nodal cliques, with nodes having a high potential for co-interference being placed in the same group.

To achieve an optimal clustering of NNDs, the partitioning process can be iterated within clusters until all requirements set for the network are achieved. Where a nodal clique exists that has inadequate END connectivity, inter-clique communication paths are defined. Each partition 24 comprises at least one wired node (END) and each node 10 in the partition 24 has at least one link 22 to another node 10 in the same partition 24 with sufficient quality for effective communication. There is always a route back to the wired node from any of the wireless-only nodes. There can be multiple wired nodes in the same partition.

The resulting clustering of NNDs, where any NNDs that will communicate with another are uniquely placed in a partition, results in a segmentation of the network where no inter-segment NND communication is permitted. This segmentation allows for path routing decisions to be made in real or near real time at a reduced computational requirement. Data communication to and from any private wired network or public internet is only permitted via the ENDs. The requirements of each partition are that there is at least one wired node per partition and that there is no interference between partitions after link power, SNR and sub-channel control is defined.

The goals of the segmentation process are to size partitions optimally for STDMA, maximise connectivity within partitioned groups, minimise interference between partitioned groups, limit the maximum number of hops from any node to a wired node, minimise the maximum occupancy at any node and reduce demanded load across partitions. A single wired node in each of the segments continues to operate as the segment manager. Link quality continues to be monitored by evaluating potential interference during the period allocated in the global one second frame period.

New NNDs that require to connect to an existing network use the registration and link quality evaluation slots (which are defined at specific times in a frame) provided to access and measure the link. The information that they report to their initially selected END is used to determine in which segment the NND is placed and which END is used. This self-organization of the network takes place at high speed and consumes very little time. The inter-nodal and inter group communication paths are defined and optimised early on and do not change until the network is actively reconfigured or instructed to reorganize. This ensures that the delays in moving data from one point to another are both known and constant.

All nodes transmit on boundaries determined by a synchronous slot structure. When a node is to start transmitting in a slot it will always transmit at the beginning of that slot. A micro-slot structure uses shorter slots than would be ideal for data. Slots are combined to generate multi-slot data bursts. The advantages include finer grain bandwidth allocation, reduced latency and more flexible guards. The disadvantages include that it takes more info to describe slots and there is a potentially increased overhead, but this can be reduced with smart guard allocations and concatenation are used.

Each active node transmits a correlation sequence on its antennas in a selected time-slot coordinated across the whole network. It is possible that one node within a geographical region of the network is scheduled to transmit in each time slot if it is possible to guarantee that the nodes in different areas cannot interfere. The power received by all receivers during the slot is used to measure the interference from one node to all others in that region of the network. Any significant power levels (above noise floor - correlation gain) are transmitted back to the master wired nodes who then coordinate to update the sparse matrix of interference levels.

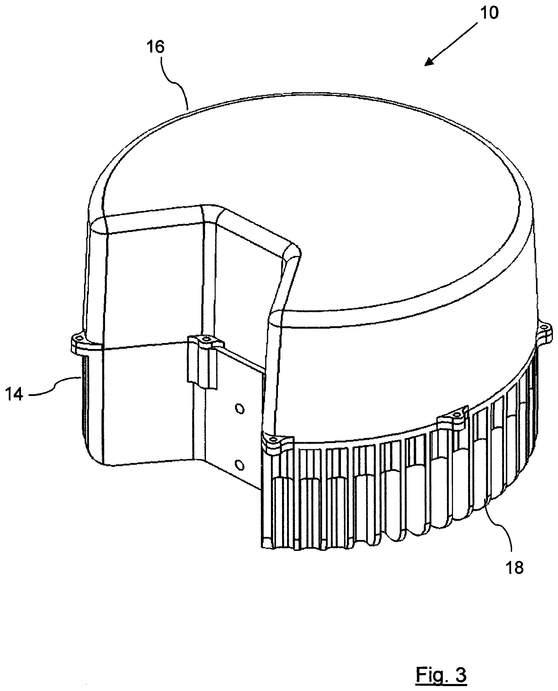

Figure 3 shows the physical exterior of a node 10. The components of the node 10 are contained within a base 14 and a radome 16. The deep aluminium base 14, which is waterproof, is provided with external fins 18 to aid in dissipating heat from the contained internal electronics. The base 14 is made from a single cast and/or milled piece of aluminium and the radome 16 is made from a suitable plastics material. Power is supplied to the node 10 via a power cable that connects to the underside of the node 10. If the node 10 is a wired node, in addition to being a wireless node, then the wired data connection also connects to the underside of the node 10.

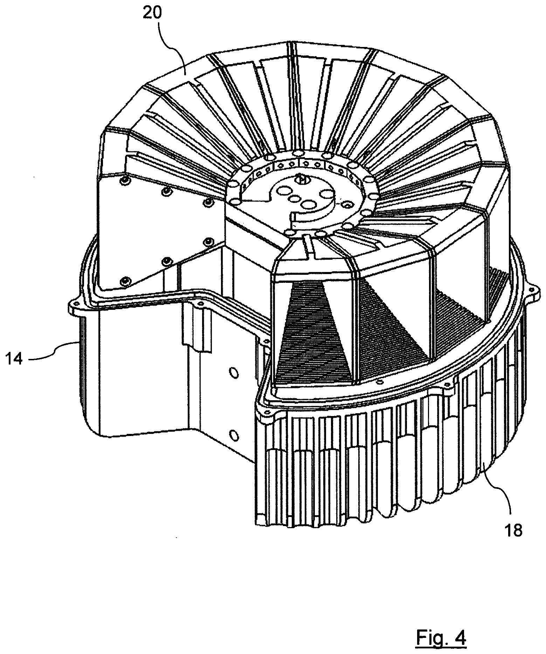

Figure 4 shows the node 10 with the radome 16 removed. Visible within the node 10 are twelve discrete antennas 20, arranged in a horizontal array around a central core of electronic components. Each node 10 is able to send and receive RF communications on all of the antennas 20, which provide a 270 degree field of view. When node partitioning takes place and links between nodes are established within a partition, the links are on an antenna to antenna basis. This means that, referring to Figure 2a, it is not just the nodes that are connected together, but specific antennas 20 of the nodes 10.

The best antennas 20 are chosen for the links, in relation to the quality characteristics being used to determine the configuration of the partitions. For example, node A may transmit to and receive RF communications from node B in the same partition using antenna number three. Node A may transmit to and receive RF communications from a different node C in the same partition using a different antenna, number seven for example. Nodes B and C will also have dedicated antennas for their communications with node A. The routing in the partition is defined in terms of the antennas 20 to be used on the inter-node communications.

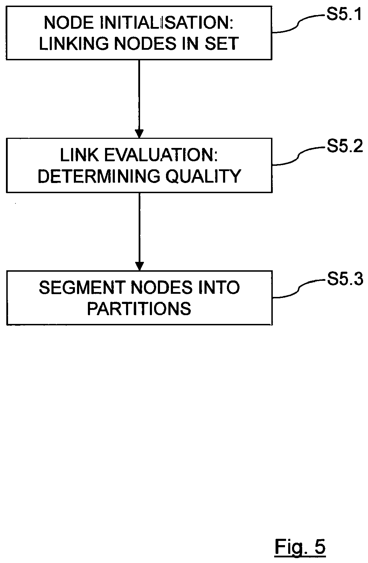

Figure 5 summarises the method of processing the set of wireless nodes 10. A subset of the wireless nodes 10 are also wired nodes 10. The method comprises the steps of firstly, step S5.1, performing a node initialisation, thereby linking nodes 10 in the set of wireless nodes 10, secondly step S5.2, performing a link evaluation, thereby determining a quality characteristic of links 22 between nodes 10, and finally, step S5.3, segmenting the nodes 10 into partitions 24, each partition 24 comprising at least one wired node 10 and each node 10 in a partition 24 having a link 22 to another node 10 in the same partition 24 with the determined quality characteristic above a predetermined threshold.

In this way, a set of wireless nodes 10 can be placed in-situ and automatically configured into usable partitions 24 that will ensure that every node 10 that is a wireless-only node 10 has a connected route of sufficient link quality back to a wired node 10 in the same partition 24. The maximum number of partitions 24 is bounded by the number of wired nodes 10 in the set of nodes 10 and it may be that a partition 24 will have more than one wired node 10 within it, which will mean that the total number of partitions 24 will be less than the total number of wired nodes 10.

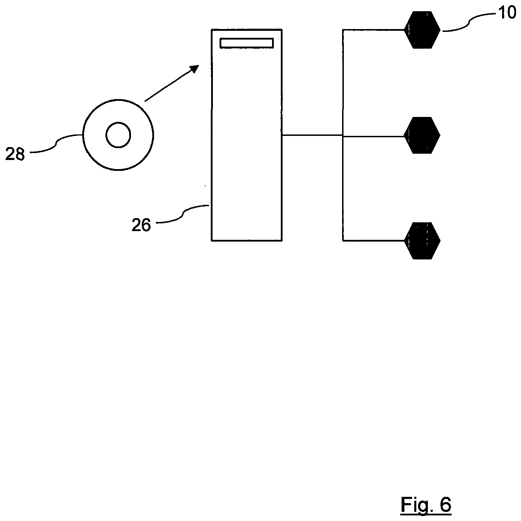

Figure 6 shows schematically a system illustrating the wired connections of the wired nodes back to a server 26. The server 26 communicates with the wired nodes via a broadband backbone. The server 26 is controlled by a computer program product on a computer readable medium 28, which is a CD-ROM 28. The computer program product comprises instructions that are used to control the processor of the server 26. The server 26 receives information from the wired nodes concerning the links 22 between nodes 10; the existence of links 22 between nodes 10 and the quality levels of those links 22. This is then used to define how the nodes 10 should be partitioned, as per the methodology of Figure 5.

## Claims

1. A method of processing a set of wireless nodes (10), wherein a subset of the wireless nodes (10) are also wired nodes (10), the method comprising:
∘ performing a node initialisation, thereby linking nodes (10) in the set of wireless nodes (10), **characterised in that** the method further comprises:
∘ performing a link evaluation, thereby determining a quality characteristic of links (22) between nodes (10), and
∘ segmenting the nodes (10) into partitions (24), each partition (24) comprising at least one wired node (10) and each node (10) in a partition (24) having a link (22) to another node (10) in the same partition (24) with the determined quality characteristic above a predetermined threshold.

2. A method according to claim 1, and further comprising connecting a new node (10) into the set of wireless nodes (10), performing node initialisation and link evaluation for the new node (10), and adding the new node (10) into an existing partition (24) such that the new node (10) has a link (22) to another node (10) in the same partition (24) with the determined quality characteristic above the predetermined threshold.

3. A method according to claim 1 or 2, and further comprising defining, for each partition (24), a preferred route for each node (10) in the partition (24) from the respective node (10) to a wired node (10) in the partition (24).

4. A method according to claim 1, 2 or 3, wherein each node (10) comprises a plurality of antennas (20) and the step of performing the link evaluation comprises determining a quality characteristic of links (22) between individual antennas (20) of the nodes (10).

5. A method according to claims 3 and 4, wherein the preferred route for each node (10) in the partition (24) from the respective node (10) to a wired node (10) in the partition (24) is defined on an antenna-to-antenna basis.

6. A system comprising a set of wireless nodes (10), wherein a subset of the wireless nodes (10) are also wired nodes (10), the system (26) arranged to:
∘ perform a node initialisation, thereby linking nodes (10) in the set of wireless nodes (10), **characterised in that** the system is further arranged to:
∘ perform a link evaluation, thereby determining a quality characteristic of links (22) between nodes (10), and
∘ segment the nodes (10) into partitions (24), each partition (24) comprising at least one wired node (10) and each node (10) in a partition (24) having a link (22) to another node (10) in the same partition (24) with the determined quality characteristic above a predetermined threshold.

7. A system according to claim 6, wherein the system (26) is further arranged to connect a new node (10) into the set of wireless nodes (10), perform node initialisation and link evaluation for the new node (10), and add the new node (10) into an existing partition (24) such that the new node (24) has a link (22) to another node (10) in the same partition (24) with the determined quality characteristic above the predetermined threshold.

8. A system according to claim 6 or 7, wherein the system (26) is further arranged to define, for each partition (24), a preferred route for each node (10) in the partition (24) from the respective node (10) to a wired node (10) in the partition (24).

9. A system according to claim 6, 7 or 8, wherein each node (10) comprises a plurality of antennas (20) and the system (26) is arranged, when performing the link evaluation to determine a quality characteristic of links (22) between individual antennas (20) of the nodes (10).

10. A system according to claims 8 and 9, wherein the preferred route for each node (10) in the partition (24) from the respective node (10) to a wired node (10) in the partition (24) is defined on an antenna-to-antenna basis.

11. A computer program product on a computer readable medium for processing a set of wireless nodes (10), wherein a subset of the wireless nodes (10) are also wired nodes (10), the product comprising instructions for:
∘ performing a node initialisation, thereby linking nodes (10) in the set of wireless nodes (10), **characterised in that** the product further comprises instructions for:
∘ performing a link evaluation, thereby determining a quality characteristic of links (22) between nodes (10), and
∘ segmenting the nodes (10) into partitions (24), each partition (24) comprising at least one wired node (10) and each node (10) in a partition (24) having a link (22) to another node (10) in the same partition (24) with the determined quality characteristic above a predetermined threshold.

12. A computer program product according to claim 11, and further comprising instructions for connecting a new node (10) into the set of wireless nodes (10), performing node initialisation and link evaluation for the new node (10), and adding the new node (10) into an existing partition such that the new node (10) has a link (22) to another node (10) in the same partition (24) with the determined quality characteristic above the predetermined threshold.

13. A computer program product according to claim 11 or 12, and further comprising instructions for defining, for each partition (24), a preferred route for each node (10) in the partition (24) from the respective node (10) to a wired node (10) in the partition (24).

14. A computer program product according to claim 11, 12 or 13, wherein each node (10) comprises a plurality of antennas (20) and the instructions for performing the link evaluation comprise instructions for determining a quality characteristic of links (22) between individual antennas (20) of the nodes (10).

15. A computer program product according to claims 13 and 14, wherein the preferred route for each node (10) in the partition (24) from the respective node (10) to a wired node (10) in the partition (24) is defined on an antenna-to-antenna basis.

## Patentansprüche

1. Verfahren zur Verarbeitung einer Menge von Drahtlos-Knoten (10), wobei eine Teilmenge der Drahtlos-Knoten (10) auch drahtgebundene Knoten (10) sind, wobei das Verfahren umfasst:
∘ Vornehmen einer Knoteninitialisierung, wodurch Knoten (10) in der Menge von Drahtlos-Knoten (10) verbunden werden, **dadurch gekennzeichnet, dass** das Verfahren ferner umfasst:
∘ Vornehmen einer Verbindungsbewertung, wodurch ein Qualitätsmerkmal von Verbindungen (22) zwischen Knoten (10) bestimmt wird, und
∘ Segmentieren der Knoten (10) in Partitionen (24), wobei jede Partition (24) mindestens einen drahtgebundenen Knoten (10) umfasst und jeder Knoten (10) in einer Partition (24) eine Verbindung (22) zu einem anderen Knoten (10) in der gleichen Partition (24) mit dem bestimmten Qualitätsmerkmal über einem vorab festgelegten Schwellenwert aufweist.

2. Verfahren nach Anspruch 1, und ferner umfassend Einbinden eines neuen Knotens (10) in die Menge von Drahtlos-Knoten (10), Vornehmen einer Knoteninitialisierung sowie einer Verbindungsbewertung für den neuen Knoten (10) und Hinzufügen des neuen Knotens (10) in eine bestehende Partition (24) derart, dass der neue Knoten (10) eine Verbindung (22) zu einem anderen Knoten (10) in der gleichen Partition (24) mit dem bestimmten Qualitätsmerkmal über dem vorab festgelegten Schwellenwert aufweist.

3. Verfahren nach Anspruch 1 oder 2, und ferner umfassend Definieren, für jede Partition (24), einer bevorzugten Route für jeden Knoten (10) in der Partition (24) vom jeweiligen Knoten (10) zu einem drahtgebundenen Knoten (10) in der Partition (24).

4. Verfahren nach Anspruch 1, 2 oder 3, wobei jeder Knoten (10) eine Vielzahl von Antennen (20) umfasst und der Schritt des Vornehmens der Verbindungsbewertung Bestimmen eines Qualitätsmerkmals von Verbindungen (22) zwischen einzelnen Antennen (20) der Knoten (10) umfasst.

5. Verfahren nach Anspruch 3 oder 4, wobei die bevorzugte Route für jeden Knoten (10) in der Partition (24) vom jeweiligen Knoten (10) zu einem drahtgebundenen Knoten (10) in der Partition (24) auf einer Antenne-zu-Antenne-Grundlage definiert wird.

6. System, umfassend eine Menge von Drahtlos-Knoten (10), wobei eine Teilmenge der Drahtlos-Knoten (10) auch drahtgebundene Knoten (10) sind, wobei das System (26) eingerichtet ist, um:
∘ eine Knoteninitialisierung vorzunehmen, wodurch Knoten (10) in der Menge von Drahtlos-Knoten (10) verbunden werden, **dadurch gekennzeichnet, dass** das System ferner eingerichtet ist, um
∘ eine Verbindungsbewertung vorzunehmen, wodurch ein Qualitätsmerkmal von Verbindungen (22) zwischen Knoten (10) bestimmt wird, und
∘ die Knoten (10) in Partitionen (24) zu segmentieren, wobei jede Partition (24) mindestens einen drahtgebundenen Knoten (10) umfasst und jeder Knoten (10) in einer Partition (24) eine Verbindung (22) zu einem anderen Knoten (10) in der gleichen Partition (24) mit dem bestimmten Qualitätsmerkmal über einem vorab festgelegten Schwellenwert aufweist.

7. System nach Anspruch 6, wobei das System (26) ferner eingerichtet ist, um einen neuen Knoten (10) in die Menge von Drahtlos-Knoten (10) einzubinden, eine Knoteninitialisierung sowie eine Verbindungsbewertung für den neuen Knoten (10) vorzunehmen und den neuen Knoten (10) in eine bestehende Partition (24) derart hinzuzufügen, dass der neue Knoten (24) eine Verbindung (22) zu einem anderen Knoten (10) in der gleichen Partition (24) mit dem bestimmten Qualitätsmerkmal über dem vorab festgelegten Schwellenwert aufweist.

8. System nach Anspruch 6 oder 7, wobei das System (26) ferner eingerichtet ist, um für jede Partition (24) eine bevorzugte Route für jeden Knoten (10) in der Partition (24) vom jeweiligen Knoten (10) zu einem drahtgebundenen Knoten (10) in der Partition (24) zu definieren.

9. System nach Anspruch 6, 7 oder 8, wobei jeder Knoten (10) eine Vielzahl von Antennen (20) umfasst und das System (26) eingerichtet ist, bei Vornahme der Verbindungsbewertung ein Qualitätsmerkmal von Verbindungen (22) zwischen einzelnen Antennen (20) der Knoten (10) zu bestimmen.

10. System nach den Ansprüchen 8 und 9, wobei die bevorzugte Route für jeden Knoten (10) in der Partition (24) vom jeweiligen Knoten (10) zu einem drahtgebundenen Knoten (10) in der Partition (24) auf einer Antenne-zu-Antenne-Grundlage definiert ist.

11. Computerprogramm-Produkt auf einem computerlesbaren Medium zum Verarbeiten einer Menge von Drahtlos-Knoten (10), wobei eine Teilmenge der Drahtlos-Knoten (10) auch drahtgebundene Knoten (10) sind, wobei das Produkt Anweisungen umfasst zum:
∘ Vornehmen einer Knoteninitialisierung, wodurch Knoten (10) in der Menge von Drahtlos-Knoten (10) verbunden werden, **dadurch gekennzeichnet, dass** das Produkt ferner Anweisungen umfasst zum:
∘ Vornehmen einer Verbindungsbewertung, wodurch ein Qualitätsmerkmal von Verbindungen (22) zwischen Knoten (10) bestimmt wird, und
∘ Segmentieren der Knoten (10) in Partitionen (24), wobei jede Partition (24) mindestens einen drahtgebundenen Knoten (10) umfasst und jeder Knoten (10) in einer Partition (24) eine Verbindung (22) zu einem anderen Knoten (10) in der gleichen Partition (24) mit dem bestimmten Qualitätsmerkmal über einem vorab festgelegten Schwellenwert aufweist.

12. Computerprogramm-Produkt nach Anspruch 11, und ferner umfassend Anweisungen zum Einbinden eines neuen Knotens (10) in die Menge von Drahtlos-Knoten (10), Vornehmen einer Knoteninitialisierung sowie einer Verbindungsbewertung für den neuen Knoten (10) und Hinzufügen des neuen Knotens (10) in eine bestehende Partition derart, dass der neue Knoten (10) eine Verbindung (22) zu einem anderen Knoten (10) in der gleichen Partition (24) mit dem bestimmten Qualitätsmerkmal über dem vorab festgelegten Schwellenwert aufweist.

13. Computerprogramm-Produkt nach Anspruch 11 oder 12, und ferner umfassend Anweisungen zum Definieren, für jede Partition (24), einer bevorzugten Route für jeden Knoten (10) in der Partition (24) vom jeweiligen Knoten (10) zu einem drahtgebundenen Knoten (10) in der Partition (24).

14. Computerprogramm-Produkt nach Anspruch 11, 12 oder 13, wobei jeder Knoten (10) eine Vielzahl von Antennen (20) umfasst und die Anweisungen zum Vornehmen der Verbindungsbewertung Anweisungen zum Bestimmen eines Qualitätsmerkmals von Verbindungen (22) zwischen einzelnen Antennen (20) der Knoten (10) umfassen.

15. Computerprogramm-Produkt nach den Ansprüchen 13 und 14, wobei die bevorzugte Route für jeden Knoten (10) in der Partition (24) vom jeweiligen Knoten (10) zu einem drahtgebundenen Knoten (10) in der Partition (24) auf einer Antenne-zu-Antenne-Grundlage definiert ist.

## Revendications

1. Procédé pour le traitement d'un ensemble de noeuds sans fil (10), dans lequel un sous-ensemble de noeuds sans fil (10) comprend également des noeuds filaires (10), le procédé comprenant :
∘ l'exécution d'une initialisation de noeud, en reliant des noeuds (10) dans l'ensemble de noeuds sans fil (10), **caractérisé en ce que** le procédé comprend en outre :
∘ l'exécution d'une évaluation de liaison, en déterminant une caractéristique de qualité de liaisons (22) entre des noeuds (10), et
∘ la segmentation des noeuds (10) en partitions (24), chaque partition (24) comprenant au moins un noeud filaire (10) et chaque noeud (10) dans une partition (24) comportant une liaison (22) vers un autre noeud (10) dans la même partition (24) avec la caractéristique de qualité déterminée au-dessus d'un seuil prédéterminé.

2. Procédé selon la revendication 1, comprenant en outre une la connexion d'un nouveau noeud (10) dans l'ensemble de noeuds sans fil (10), l'exécution d'une initialisation de noeud et d'une évaluation de noeud pour le nouveau noeud (10), et l'ajout du nouveau noeud (10) dans une partition existante (24) de manière à ce que le nouveau noeud (10) comporte une liaison (22) vers un autre noeud (10) dans la même partition (24) avec la caractéristique de qualité déterminée au-dessus du seuil prédéterminé.

3. Procédé selon la revendication 1 ou 2, comprenant en outre la définition, pour chaque partition (24), d'une route préférée pour chaque noeud (10) dans la partition (24) allant du noeud respectif (10) à un noeud filaire (10) dans la partition (24).

4. Procédé selon la revendication 1, 2 ou 3, dans lequel chaque noeud (10) comprend une pluralité d'antennes (20) et l'étape d'exécution de l'évaluation de liaison comprend la détermination d'une caractéristique de qualité de liaisons (22) entre des antennes individuelles (20) des noeuds (10).

5. Procédé selon les revendications 3 et 4, dans lequel la route préférée pour chaque noeud (10) dans la partition (24) allant du noeud respectif (10) à un noeud filaire (10) dans la partition (10) est définie sur une base d'antenne à antenne.

6. Système comprenant un ensemble de noeuds sans fil (10), dans lequel un sous-ensemble de noeuds sans fil (10) comprend également des noeud filaire (10), le système (26) étant conçu pour :
∘ exécuter une initialisation de noeud, en reliant des noeuds (10) dans l'ensemble de noeuds sans fil (10), **caractérisé en ce que** le système est en outre conçu pour :
∘ exécuter une évaluation de liaison, en déterminant une caractéristique de qualité de liaisons (22) entre des noeuds (10), et
∘ segmenter les noeuds (10) en partitions (24), chaque partition (24) comprenant au moins un noeud filaire (10) et chaque noeud (10) dans une partition (24) comportant une liaison (22) vers un autre noeud (10) dans la même partition (24) avec la caractéristique de qualité déterminée au-dessus d'un seuil prédéterminé.

7. Système selon la revendication 6, dans lequel le système (26) est en outre conçu pour relier un nouveau noeud (10) dans l'ensemble de noeuds sans fil (10), exécuter une initialisation de noeud et une évaluation de liaison pour le nouveau noeud (10), et ajouter le nouveau noeud (10) dans une partition existante (24) de manière à ce que le nouveau noeud (10) comporte une liaison (22) vers un autre noeud (10) dans la même partition (24) avec la caractéristique de qualité déterminée au-dessus du seuil prédéterminé.

8. Système selon la revendication 6 ou 7, dans lequel le système (26) est en outre conçu pour définir, pour chaque partition (24), une route préférée pour chaque noeud (10) dans la partition (24) allant du noeud respectif (10) à un noeud filaire (10) dans la partition (24).

9. Système selon la revendication 6, 7 ou 8, dans lequel chaque noeud (10) comprend une pluralité d'antennes (20) et le système est conçu pour déterminer, au cours de l'étape d'exécution de l'évaluation de liaison, une caractéristique de qualité de liaisons (22) entre des antennes individuelles (20) des noeuds (10).

10. Système selon les revendications 8 et 9, dans lequel la route préférée pour chaque noeud (10) dans la partition (24) allant du noeud respectif (10) à un noeud filaire (10) dans la partition (24) est définie sur une base d'antenne à antenne.

11. Produit de programme informatique installé sur un support lisible par ordinateur, pour le traitement d'un ensemble de noeuds sans fil (10), dans lequel un sous-ensemble de noeuds sans fil (10) comprend également des noeud filaire (10), le produit comprenant des instructions pour :
∘ l'exécution d'une initialisation de noeud, en reliant des noeuds (10) dans l'ensemble de noeuds sans fil (10), **caractérisé en ce que** le produit comprend en outre des instructions pour :
∘ l'exécution d'une évaluation de liaison, en déterminant une caractéristique de qualité de liaisons (22) entre des noeuds (10), et
∘ la segmentation des noeuds (10) en partitions (24), chaque partition (24) comprenant au moins un noeud filaire (10) et chaque noeud (10) dans une partition (24) comportant une liaison (22) vers un autre noeud (10) dans la même partition (24) avec la caractéristique de qualité déterminée au-dessus d'un seuil prédéterminé.

12. Produit de programme informatique selon la revendication 11, comprenant en outre des instructions pour la connexion d'un nouveau noeud (10) dans l'ensemble de noeuds sans fil (10), l'exécution d'une initialisation de noeud et d'une évaluation de noeud pour le nouveau noeud (10), et l'ajout du nouveau noeud (10) dans une partition existante (24) de manière à ce que le nouveau noeud (10) comporte une liaison (22) vers un autre noeud (10) dans la même partition (24) avec la caractéristique de qualité déterminée au-dessus du seuil prédéterminé.

13. Produit de programme informatique selon la revendication 11 ou 12, comprenant en outre des instructions pour définir, pour chaque partition (24), une route préférée pour chaque noeud (10) dans la partition (24) allant du noeud respectif (10) à un noeud filaire (10) dans la partition (24).

14. Produit de programme informatique selon la revendication 11, 12 ou 13, dans lequel chaque noeud (10) comprend une pluralité d'antennes (20) et les instructions pour l'exécution de l'évaluation de liaison comprennent des instructions pour la détermination d'une caractéristique de qualité de liaisons (22) entre des antennes individuelles (20) des noeuds (10).

15. Produit de programme informatique selon les revendications 13 et 14, dans lequel la route préférée pour chaque noeud (10) dans la partition (24) allant du noeud respectif (10) à un noeud filaire (10) dans la partition est définie sur une base d'antenne à antenne.
